# EUROPÄISCHE PATENTSCHRIFT

(11) **EP 2 029 403 B1**
(45) Veröffentlichungstag und Bekanntmachung des Hinweises auf die Patenterteilung: **22.12.2010**
(21) Anmeldenummer: 07727688.9
(22) Anmeldetag: 03.04.2007
(51) Int. Cl.: B60T 7/12

(54) **HILLHOLD-BREMSFUNKTION MIT INTEGRIERTEM RUTSCHTEST**
HILL HOLD BRAKE FUNCTION WITH INTEGRATED SLIP TEST
FONCTION DE FREINAGE HILLHOLD AVEC TEST DE DÉRAPAGE INTÉGRÉ

(30) Priorität: 24.05.2006 DE 102006024362
(43) Veröffentlichungstag der Anmeldung: 04.03.2009
(73) Patentinhaber: Robert Bosch GmbH, 70442 Stuttgart (DE)
(72) Erfinder: STREIT, Andreas, 71701 Schwieberdingen (DE); BRAEUER, Toni, 71636 Ludwigsburg (DE)
(86) Internationale Anmeldenummer: PCT/EP2007/053217
(87) Internationale Veröffentlichungsnummer: WO 2007/134902

(56) Entgegenhaltungen:
- DE-A1- 10 322 125
- DE-A1- 19 950 028
- DE-A1-102005 015 062

## Beschreibung

### Stand der Technik

Die Erfindung betrifft ein Verfahren zum Sichern eines stehenden Fahrzeugs gegen unbeabsichtigtes Wegrollen gemäß dem Oberbegriff des Patentanspruchs 1, sowie ein entsprechend eingerichtetes Steuergerät zum Durchführen dieser Verfahren gemäß dem Oberbegriff des Patentanspruchs 9.

Moderne Fahrzeuge sind bereits häufig mit einer automatischen Bremsfunktion ausgestattet, die ein auf geneigter Fahrbahn stehendes Fahrzeug, das bis zum Stillstand abgebremst wurde, gegen erneutes Losrollen sichert. Derartige Bremsfunktionen werden üblicherweise auch als "Hillhold-Funktion" (HHC) bezeichnet und sind beispielsweise aus der DE 199 50 034 A1 bekannt.

Aus der gattungsbildenden DE 199 50 028 A1 sind ein Verfahren und eine Vorrichtung zur Steuerung eines Fahrzeugs bekannt, bei welchen wenigstens bei Fahrzeugstillstand die Bremskraft an wenigstens einem Rad unabhängig vom Ausmaß der Pedalbetätigung gehalten wird. Bei Vorliegen einer Abschaltbedingung wird die Bremskraft abgebaut, während bei erkanntem Rutschen des Fahrzeugs Bremskraft unabhängig von dieser Bedingung abgebaut wird. Ferner werden Maßnahmen zur Erkennung des Rutschens des Fahrzeugs und einer Rutschgefahr vorgestellt.

Hillhold-Funktionen arbeiten im Allgemeinen wie folgt: Bei einem Bremsvorgang, bei dem der Fahrer das Fahrzeug bis zum Stillstand abbremst, wird der an den Radbremsen herrschende Bremsdruck mit Hilfe von Schaltventilen eingesperrt. Die Ventile werden hierzu von einem Steuergerät, in dem die HHC-Funktion hinterlegt ist, entsprechend angesteuert. Der Bremsdruck bleibt dadurch automatisch erhalten, auch wenn der Fahrer den Fuß vom Bremspedal nimmt. Um die Bremsen wieder zu lösen, muss der Fahrer in der Regel das Fahrpedal betätigen oder die HHC-Funktion anderweitig, z.B. mittels eines Entriegelungs-Schalters, deaktivieren.

Die aus dem Stand der Technik bekannte Hillhold-Funktion bietet in den meisten Fahrsituationen eine deutliche Verbesserung des Fahrkomforts, birgt unter gewissen Umständen aber auch Risiken. Bei glatter, vereister Fahrbahn kann es bekanntlich dazu kommen, dass ein Fahrzeug aus dem Stand heraus zu rutschen beginnt. Eine typische Situation ist beispielsweise eine vereiste Tiefgarageneinfahrt, auf der das Fahrzeug ins Rutschen gerät. In einer solchen Situation ist es für einen ungeübten Fahrer kaum möglich, die Hillhold-Funktion schnell genug zu lösen und damit das Fahrzeug wieder lenkbar zu machen. Der Fahrer wird insbesondere kaum das Fahrpedal betätigen, um die Bremse zu lösen, wie es eigentlich vorgesehen wäre.

Um solche kritischen Situationen zu vermeiden, wird bei bekannten HHC-Systemen ein Rutschtest durchgeführt, mit dem das Rutschen des Fahrzeugs erkannt werden kann. Dabei wird der an den Radbremsen eingesperrte Bremsdruck an zumindest einem Rad (Testrad) abgebaut, so dass sich das Rad drehen kann, sofern das Fahrzeug rutschen sollte. Wenn die Drehung des Testrades einen vorgegebenen Schwellenwert überschreitet, wird der Zustand "Fahrzeug rutscht" erkannt und die Hillhold-Funktion automatisch deaktiviert, d. h. der Bremsdruck an den übrigen Radbremsen ebenfalls abgebaut. Dieser Rutschtest funktioniert im Grunde hinreichend zuverlässig, hat jedoch den Nachteil, dass zum Abbau des Bremsdrucks am Testrad üblicherweise eine Hydraulikpumpe eingesetzt werden muss. Im Stillstand des Fahrzeugs, wenn andere Fahrgeräusche größtenteils fehlen, kann das Laufgeräusch der Hydraulikpumpe vom Fahrer als störend empfunden werden. Außerdem bringt die relativ lange Pumpenlaufzeit einen entsprechenden Verschleiß der Pumpen mit sich.

### Offenbarung der Erfindung

Es ist daher die Aufgabe der vorliegenden Erfindung, eine Hillhold-Funktion mit Rutschtest zu realisieren, bei der die Pumpenlaufzeit wesentlich kürzer ist bzw. die Pumpe überhaupt nicht mehr betätigt werden muss.

Gelöst wird diese Aufgabe gemäß der Erfindung durch die in den Patentansprüchen 1 und 9 angegebenen Merkmalen. Weitere Ausgestaltungen der Erfindung sind Gegenstand von Unteransprüchen.

Ein wesentlicher Aspekt der Erfindung besteht darin, den Anstieg des Bremsdrucks während des Bremsvorgangs an wenigstens einer Radbremse zu begrenzen oder vollständig zu unterbinden, so dass der Bremsdruck an diesem Rad (Testrad) nur geringfügig oder gar nicht ansteigt. Dadurch kann die Pumpenlaufzeit für den Druckabbau am Testrad wesentlich verkürzt bzw. auf den Einsatz der Pumpe vollständig verzichtet werden. Daraus ergibt sich wiederum eine geringere Geräuschbelastung sowie ein geringerer Verschleiß der Pumpe.

Um den Druckanstieg am Testrad zu begrenzen, wird vorzugsweise eine Druckbegrenzungseinrichtung, wie z. B. ein Ventil, entsprechend angesteuert, d.h. während des Bremsvorgangs ganz oder teilweise geschlossen. Die zugehörige Funktion ist vorzugsweise in einem Steuergerät hinterlegt.

Gemäß einer ersten Ausführungsform der Erfindung ist die Hillhold-Funktion derart konfiguriert, dass der Druckanstieg an wenigstens einem Testrad vollständig verhindert und die zugehörige Radbremse bei einer Fahrerbremsung im wesentlichen drucklos gehalten wird. Dadurch bleibt das Testrad für den Fall, dass das Fahrzeug rutschen sollte, beweglich. Zur Begrenzung des Bremsdrucks kann beispielsweise ein Einlassventil der Radbremse, das in den meisten Bremsanlagen ohnehin verbaut ist, geschlossen werden. Bei dieser ersten Ausführungsform ist es somit nicht erforderlich, die Pumpe zum Abbau des Bremsdrucks am Testrad zu betreiben.

Gemäß der Erfindung ist die Hillhold-Funktion derart realisiert, dass der Druckanstieg an wenigstens einem Testrad begrenzt und danach wieder abgebaut wird. Dies hat den Vorteil, dass die Pumpe wegen des vergleichsweise geringen Bremsdrucks am Testrad nur kurz betrieben werden muss.

Der Druckabbau am Testrad erfolg noch vor dem Stillstand des Fahrzeugs. Das Pumpengeräusch ist für den Fahrer in diesem Fall weniger störend, da die Pumpe noch vor dem Stillstand des Fahrzeugs betrieben wird und das Pumpengeräusch somit durch andere Fahrgeräusche zumindest teilweise überdeckt wird.

Der Bremsdruck am Testrad wird vorzugsweise nur in einer solchen Fahrsituation begrenzt, in der das Fahrzeug von einer geringen Geschwindigkeit herunter gebremst wird. Dadurch wird sichergestellt, dass das Fahrzeug auch mit begrenztem Bremsdruck eine vorgeschriebene Mindestverzögerung erreicht und somit die Fahrsicherheit nicht gefährdet wird.

Die vorstehend beschriebenen Verfahren werden außerdem vorzugsweise nur unter solchen Fahrbedingungen durchgeführt, in denen eine Rutschgefahr grundsätzlich besteht. Eine Rutschgefahr wird erfindungsgemäß z. B. angenommen, wenn die Außentemperatur einen vorgegebenen Temperatur-Schwellenwert, z. B. 3°C, unterschreitet.

Der Zustand "Rutschgefahr" könnte wahlweise durch Abschätzung des Reibwerts µ ermittelt werden. Hierzu sind verschiedene Algorithmen hinreichend bekannt. Der Bremsdruck wird in diesem Fall nur dann begrenzt, wenn der Reibwert gering ist und einen vorgegebenen Schwellenwert unterschreitet. Wahlweise können auch andere Kriterien herangezogen werden.

Der efindungsgemäße Rutschtest (d. h. die Überwachung der Drehbewegung eines Rades) wird vorzugsweise an einem Rad der Hinterachse durchgeführt, da diese üblicherweise einen geringem Anteil an der Gesamtverzögerung aufbringen.

Eine erfindungsgemäß eingerichtete Bremsanlage mit Hillhold-Funktion umfasst vorzugsweise ein Steuergerät, in dem die HHC-Funktion als Algorithmus hinterlegt ist, sowie ein hydraulisches Bremssystem mit mehreren Radbremsen, wenigstens einer Hydraulikpumpe und einer Druckbegrenzungseinrichtung, wie z. B. einem Ventil. Das Steuergerät ist zumindest mit der Druckbegrenzungseinrichtung und der Hydraulikpumpe verbunden und steuert diese im Falle eines Bremsvorgangs, bei dem die Hillhold-Funktion aktiviert werden soll, wie vorstehend beschrieben an.

### Kurze Beschreibung der Zeichnungen

Die Erfindung wird nachstehend anhand der beigefügten Zeichnungen beispielhaft näher erläutert. Es zeigen:
- Fig. 1: Eine schematische Darstellung einer hydraulischen KFZ-Bremsanlage mit Hillhold-Funktion;
- Fig. 2: Ein Flussdiagramm zur Darstellung der wesentlichen Verfahrensschritte der Hillhold-Funktion gemäß einer ersten Ausführungsform der Erfindung;
- Fig. 3: Ein Flussdiagramm zur Darstellung der wesentlichen Verfahrensschritte der Hillhold-Funktion gemäß einer zweiten Ausführungsform der Erfindung;
- Fig. 4: Ein Flussdiagramm zur Darstellung der wesentlichen Verfahrensschritte der Hillhold-Funktion gemäß einer dritten Ausführungsform der Erfindung;
- Fig. 5: Ein Flussdiagramm zur Darstellung der wesentlichen Verfahrensschritte der Hillhold-Funktion gemäß einer vierten Ausführungsform der Erfindung.

### Ausführungsformen der Erfindung

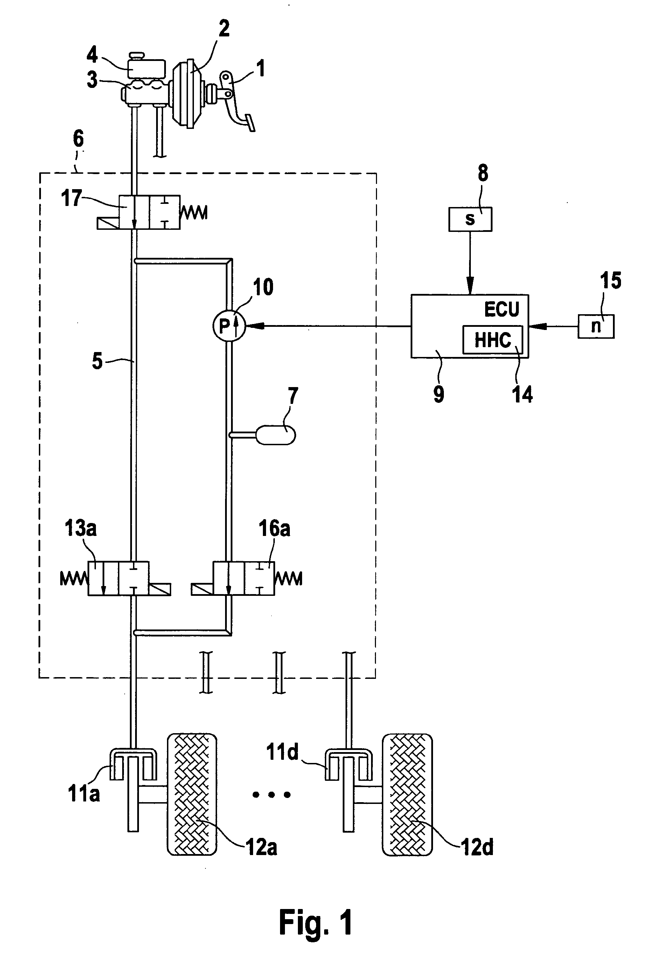

Fig. 1 zeigt eine schematische Darstellung einer hydraulischen Bremsanlage mit Hillhold-Funktion 14. Das eigentliche Bremssystem ist hier aus Gründen der Übersichtlichkeit nur schematisch als ein Block 6 dargestellt.

Die Bremsanlage umfasst in bekannter Weise ein Fuß-Bremspedal 1 und einen Bremskraftverstärker 2, der die vom Fahrer ausgeübte Bremskraft verstärkt, sowie einen Haupt-Bremszylinder 3 mit einem darauf angeordneten Bremsflüssigkeitsbehälter 4. Bei einer Bremsbetätigung wird der im Haupt-Bremszylinder 3 erzeugte Bremsdruck über eine Hydraulikleitung 5 zu den einzelnen Radbremsen 11 a-11 d geleitet. Dadurch werden die Räder 12a-12d des Fahrzeugs verzögert.

Die Bremsanlage umfasst ein Bremsen-Steuergerät 9, in dem neben anderen Algorithmen eine Hillhold-Funktion (HHC) 14 hinterlegt ist. Die Hillhold-Funktion 14 dient dazu, das Fahrzeug nach einer Bremsung bis zum Stillstand gegen unbeabsichtigtes Losrollen zu sichern. Die Funktion arbeitet im Wesentlichen wie folgt: Bei einem Bremsvorgang, bei dem sich an den Radbremsen 11a-11d Druck aufbaut, wird dieser durch Schließen der Ventile 13a-13d und 16a-16d eingesperrt und gehalten. (Von den Ventilen 13 und 16 sind nur die Ventile 13a und 16a einer der Bremsen 11 dargestellt). Das Fahrzeug wird dadurch automatisch gehalten, ohne dass der Fahrer hierzu das Fuß-Bremspedal betätigen muss. Die Funktion wird wieder deaktiviert, wenn der Fahrer das Fahrpedal betätigt oder die Funktion anderweitig, z.B. mittels eines Entriegelungs-Schalters, deaktiviert.

Um in einer kritischen Situation ein schnelles Deaktivieren der HHC-Funktion 14 zu ermöglichen, führt das System einen Rutschtest durch, bei dem die Bewegung eines Testrades (z. B. 12a) überwacht wird. Sofern bei diesem Test der Zustand "Fahrzeug rutscht" erkannt wird, wird die HHC-Funktion automatisch deaktiviert und der an den Bremsen 11 a bis 11 d eingesperrte Bremsdruck wieder abgebaut, um die Lenkfähigkeit des Fahrzeugs sicherzustellen.

Im Folgenden werden verschiedene Verfahren einer Hillhold-Funktion mit zugehörigem Rutschtest beispielhaft näher erläutert.

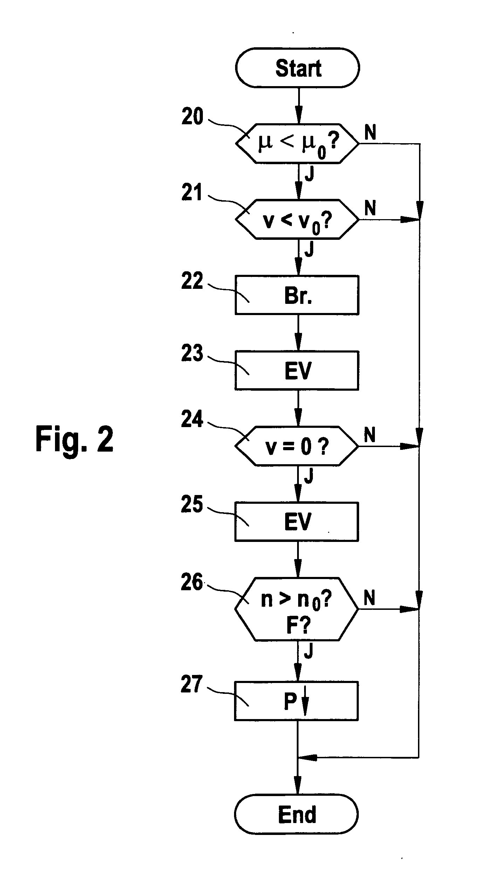

Fig. 2 zeigt ein Flussdiagramm eines ersten Ausführungsbeispiels einer Hillhold-Funktion mit Rutschtest. Dabei wird der Aufbau von Bremsdruck während eines Bremsvorgangs an einem ausgewählten Rad (Testrad) vollständig blockiert und an den anderen Rädern (z. B. 12b-12d) in üblicher Weise zugelassen. Nachdem das Fahrzeug zum Stillstand gekommen ist, ist das Testrad (z. B. 12a) somit weiterhin drehbar, während die anderen Räder (12b-12d) blockiert sind. Wenn sich das Testrad im Stillstand zu drehen beginnt, wird der Zustand "Fahrzeug rutscht" erkannt.

Im Einzelnen prüft die Funktion zunächst in Schritt 20, ob überhaupt Fahrbedingungen (z. B. eine vereiste Fahrbahn) vorliegen, in denen das Fahrzeug rutschen kann. Die Rutschgefahr kann beispielsweise durch Überwachung der Umgebungstemperatur oder eine Abschätzung des Fahrbahn-Reibwerts µ erkannt werden. Der Rutschtest wird nur für den Fall (J) durchgeführt, in dem eine Rutschgefahr besteht. Anderenfalls (N) endet das Verfahren.

In Schritt 21 wird überprüft, ob die Geschwindigkeit des Fahrzeugs v kleiner ist als eine vorgegebene niedrige Geschwindigkeits-Schwelle v₀. Nur bei niedrigen Fahrgeschwindigkeiten kann der Druckaufbau an einer Radbremse aus Sicherheitsgründen blockiert werden. Bei höheren Geschwindigkeiten (Fall N) bestünde ansonsten die Gefahr, dass die vom Fahrer gewünschte Fahrzeugverzögerung nicht erreicht wird. In diesem Fall (N) endet das Verfahren ebenfalls. Die Fahrzeuggeschwindigkeit v kann beispielsweise aus einem Signal von Drehzahlsensoren 15 (siehe Fig. 1) ermittelt werden.

Wenn das Steuergerät 9 in Schritt 22 erkennt, dass der Fahrer das Fuß-Bremspedal betätigt, steuert es in Schritt 23 das Einlassventil 13 eines der Hinterräder z. B. 12c an, schließt dieses und blockiert damit den Druckaufbau an der zugehörigen Radbremse (11 c).

Im nächsten Schritt 24 wird überprüft, ob das Fahrzeug zum Stillstand gekommen ist. Dies kann ebenfalls durch Auswertung der Rad-Drehzahlsensoren 15 erkannt werden. Falls der Fahrer dagegen das Fahrpedal erneut betätigt, endet das Verfahren. Sobald sich das Fahrzeug im Stillstand befindet, steuert das Steuergerät 9 in Schritt 25 die Ventile (13a, b, d) der übrigen Räder (12a, 12b, 12d) an und sperrt den Bremsdruck an den zugehörigen Radbremsen (11a, 11b, 11d) ein. Die übrigen Räder sind somit blockiert.

Die nachfolgenden Verfahrensschritte 26 und 27 beschreiben einen Rutschtest, bei dem zunächst im Schritt 26 die Bewegung des Testrades 12c überwacht wird. Hierzu wird vorzugsweise der zugehörige Drehzahlsensors 15 ausgewertet. Wenn die Bewegung des Testrades 12c einen vorgegebenen Schwellenwert n₀ überschreitet (Fall J in Schritt 26), wird der Zustand "Fahrzeug rutscht" erkannt und in Schritt 27 unmittelbar der Bremsdruck aus den Radbremsen 11 a, 11 b, 11 d entlassen. Hierzu steuert das Steuergerät 9 die zugehörigen Auslassventile 16a, 16b, 16d entsprechend an. Die HHC-Funktion wird dadurch automatisch deaktiviert. Ein Betrieb der Hydraulikpumpe 10 zum Durchführen des Rutschtests ist dabei nicht erforderlich.

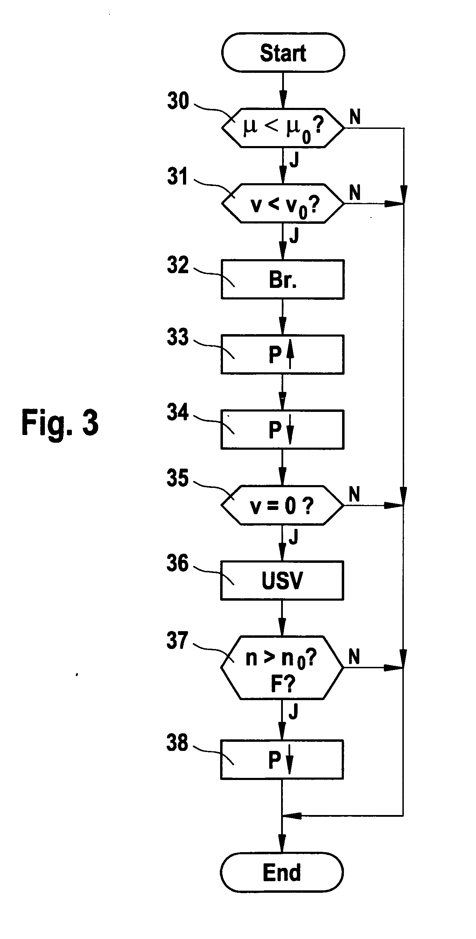

Fig. 3 zeigt eine andere Ausführungsform einer Hillhold-Funktion mit integriertem Rutschtest, bei der der Aufbau von Bremsdruck an einem Testrad (z. B. 12c) in einer ersten Phase eines Bremsvorgangs zugelassen, und der Bremsdruck in einer zweiten Phase des Bremsvorgangs, noch vor dem Stillstand des Fahrzeugs, wieder abgebaut wird.

Bei diesem Verfahren wird zunächst in Schritt 30 wiederum die grundsätzliche Rutschgefahr bewertet und in Schritt 31 die Geschwindigkeit des Fahrzeugs überwacht, wie dies vorstehend bezüglich der Verfahrensschritte 20 und 21 beschrieben wurde. Im Falle einer Bremsung (Block 32), wird der Aufbau vom Bremsdruck am Testrad 12c vorübergehend zugelassen (Schritt 33). In Schritt 34 wird der Bremsdruck p an der Radbremse (11c) des Testrades (12c) dann mittels der Hydraulikpumpe 10 wieder abgebaut. Die Pumpe 10 wird dabei so angesteuert, dass sie zumindest vor dem Stillstand des Fahrzeugs anläuft und den Bremsdruck p vorzugsweise bereits vor dem Stillstand des Fahrzeugs abgebaut hat. Das Pumpen-Laufgeräusch wird dadurch von anderen Fahrgeräuschen zumindest teilweise überdeckt.

In Schritt 35 wird der Stillstand des Fahrzeugs erkannt und der Bremsdruck danach (Schritt 36) an den übrigen Radbremsen 11 a, 11 b, 11 d wiederum eingesperrt, um das Fahrzeug zu sichern. In den Schritten 37 und 38 wird dann der Rutschtest durchgeführt und die HHC-Funktion 14 ggf. deaktiviert, wie vorstehend bezüglich der Schritte 26 und 27 beschrieben wurde.

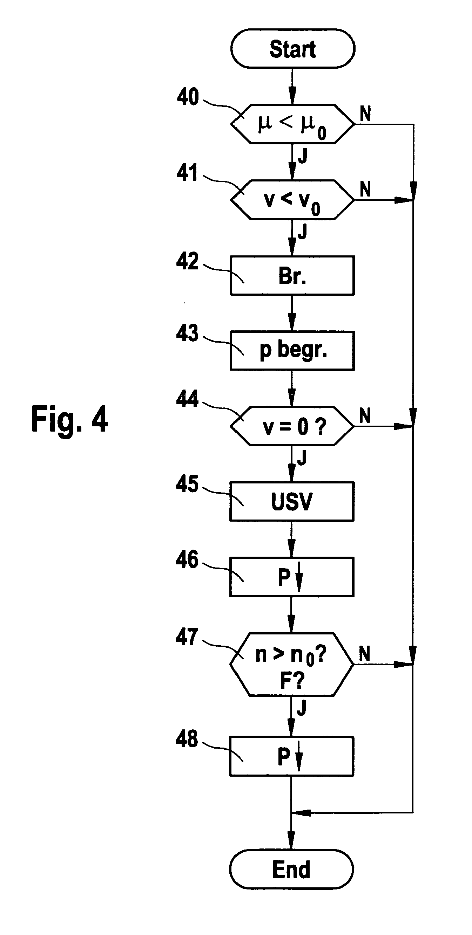

Fig. 4 zeigt die wesentlichen Verfahrensschritte einer Hillhold-Funktion mit integriertem Rutschtest, bei der der Aufbau von Bremsdruck am Testrad (z. B. 12c) während des Bremsvorgangs begrenzt wird. Dadurch wird erreicht, dass die Pumpenlaufzeit zum Abbauen des Bremsdrucks wesentlich verkürzt werden kann. Im Unterschied zur Hillhold-Funktion von Fig. 3 wird hier in Schritt 44 der Aufbau des Bremsdrucks p am Testrad (12c) durch geeignete Ansteuerung einer Druckbegrenzungseinrichtung (z. B. 13c) begrenzt. Der Abbau des Bremsdrucks (Schritt 35) am Testrad 12c kann hier vor oder nach dem Stillstand des Fahrzeugs (Schritt 34) erfolgen.

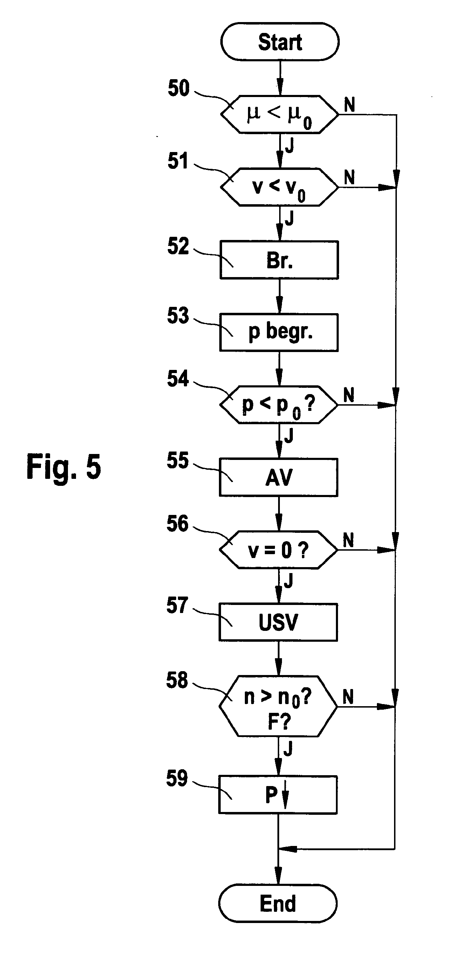

Fig. 5 zeigt eine vierte Ausführungsform einer Hillhold-Funktion mit Rutschtest, bei der der Bremsdruck am Testrad ohne den Einsatz der Pumpe 10, nämlich allein durch Öffnen eines Auslassventils 16 (siehe Fig. 1), reduziert wird. Die Bremsflüssigkeit fließt dadurch in einen der Radbremse 11a-11d nachgeordneten Speicher 7. Während des Stillstands des Fahrzeugs ist es daher nicht notwendig, die Pumpe 10 zu betreiben. Dieses Verfahren ist jedoch nur möglich, wenn der Fahrer nur leicht bremst und somit nur relativ wenig Bremsflüssigkeit in den Radbremsen vorhanden ist.

Bei diesem Verfahren wird in Schritt 50 wiederum zunächst die Rutschgefahr bewertet und in Schritt 51 die Geschwindigkeit v des Fahrzeugs überwacht. Bei einem Bremsvorgang, der in Schritt 52 erkannt wird, wird der Aufbau von Bremsdruck p am Testrad, z. B. 12c, begrenzt. Die Höhe des Bremsdrucks p wird in Schritt 54 überprüft. Wenn der Bremsdruck p größer ist als ein vorgegebener Schwellenwert p₀ (Fall N), endet das Verfahren. Falls der Druck p dagegen kleiner ist, wird der Druck p am Testrad (11c) in Schritt 55 abgebaut und in einen Speicher 7 geleitet. Da nur relativ wenig Bremsflüssigkeit in der Bremse (11c) war, wird sich der Bremsdruck p dadurch soweit verringern, dass das Rad frei drehen kann und insbesondere nicht mehr blockiert. Nach dem Stillstand des Fahrzeugs, der in Schritt 56 erkannt wird, wird der Druck wiederum an den Bremsen 11 a, 11 b, 11d der übrigen Räder 12a, 12b, 12d eingesperrt. Nach dem Eintreten der Deaktivierungs-Bedingung in Schritt 58 wird der Bremsdruck an den Rädern 12a, 12b, 12d wieder abgebaut (Schritt 59). Wenn das Fahrzeug nach dem Losfahren eine vorgegebene Geschwindigkeit erreicht hat, wird schließlich in Schritt 60 die Pumpe 10 betätigt, um den Speicher 7 zu entleeren. Auch in diesem Fall wird die Pumpe nicht während der Stillstandszeit des Fahrzeugs betrieben.

## Patentansprüche

1. Verfahren zum Sichern eines stehenden Fahrzeugs gegen unbeabsichtigtes Losrollen, bei dem der an den Radbremsen (11a-11d) herrschende Bremsdruck (p) automatisch eingesperrt und gehalten wird, um das Fahrzeug im Stillstand gegen unbeabsichtigtes Losrollen zu sichern, wobei der Aufbau von Bremsdruck (p) während eines Bremsvorgangs an der Radbremse (11a) eines Testrades (12a) begrenzt wird, so dass an dieser Radbremse (11a) ein geringerer Bremsdruck vorliegt als an den anderen Radbremsen (11b-11d),
**dadurch gekennzeichnet, dass** der reduzierte Bremsdruck (p) an der Radbremse (11a-11d) des Testrades (12a-12d) noch vor dem Stillstand des Fahrzeugs wieder abgebaut wird, um eine Bewegung des zugehörigen Rades (12a-12d) zu ermöglichen, falls das Fahrzeug rutschen sollte.

2. Verfahren nach Anspruch 1, **dadurch gekennzeichnet, dass** der Aufbau von Bremsdruck (p) während eines Bremsvorgangs an der Radbremse (11 a) des Testrades (12a) vollständig verhindert und die Radbremse (11a) drucklos gehalten wird.

3. Verfahren nach einem der vorhergehenden Ansprüche, **dadurch gekennzeichnet, dass** die Umgebungstemperatur (T) überwacht und das Verfahren nur dann durchgeführt wird, wenn die Temperatur kleiner ist als ein vorgegebener Schwellenwert.

4. Verfahren nach einem der vorhergehenden Ansprüche, **dadurch gekennzeichnet, dass** der Reibwert (µ) der Fahrbahn ermittelt und das Verfahren nur dann durchgeführt wird, wenn der Reibwert kleiner ist als ein vorgegebener Schwellenwert.

5. Verfahren nach einem der vorhergehenden Ansprüche, **dadurch gekennzeichnet, dass** ein Ventil (13) der Bremsanlage angesteuert wird, um den Aufbau von Bremsdruck an der Radbremse (11a-11d) des Testrades zu begrenzen oder vollständig zu verhindern.

6. Verfahren nach einem der vorhergehenden Ansprüche, **dadurch gekennzeichnet, dass** die Geschwindigkeit des Fahrzeugs während eines Bremsvorgangs überwacht, und der Aufbau des Bremsdrucks (p) an einer Radbremse (11a-11d) nur begrenzt wird, wenn die Geschwindigkeit kleiner ist als ein vorgegebener Geschwindigkeits-Schwellenwert.

7. Verfahren nach einem der vorhergehenden Ansprüche, **dadurch gekennzeichnet, dass** das Testrad ein Hinterrad (11c, 11d) ist.

8. Verfahren nach einem der vorhergehenden Ansprüche, **dadurch gekennzeichnet, dass** die Drehbewegung des Testrades (12a-12d) überwacht und der Bremsdruck (p) an sämtlichen Rädern (12a-12d) abgebaut wird, wenn die Radgeschwindigkeit des Testrades (12a-12d) größer ist als ein vorgegebener Schwellenwert.

9. Steuergerät mit einem Algorithmus (14) zum Durchführen einer Bremsfunktion, mittels der ein Fahrzeug im Stillstand gesichert werden kann, **dadurch gekennzeichnet, dass** es Mittel zum Durchführen eines Verfahrens gemäß einem der vorstehend genannten Ansprüche umfasst.

## Claims

1. Method for securing a stationary vehicle against unintentional rolling away, in which the brake pressure (p) prevailing at the wheel brakes (11a-11d) is shut in and maintained automatically in order to secure the vehicle in the stationary state against unintentional rolling away, wherein the build-up of brake pressure (p) during a braking process at the wheel brake (11a) of a test wheel (12a) is limited so that a lower brake pressure is present at this wheel brake (11a) than at the other wheel brakes (11b-11d),
**characterized in that** the reduced brake pressure (p) at the wheel brake (11a-11d) of the test wheel (12a-12d) is reduced again before the stationary state of the vehicle, in order to permit movement of the associated wheel (12a-12d) if the vehicle happens to slip.

2. Method according to Claim 1, **characterized in that** the build-up of brake pressure (p) is completely prevented during a braking process at the wheel brake (11a) of the test wheel (12a), and the wheel brake (11a) is kept in a non-pressurized state.

3. Method according to one of the preceding claims, **characterized in that** the ambient temperature (T) is monitored, and the method is carried out only if the temperature is lower than a predefined threshold value.

4. Method according to one of the preceding claims, **characterized in that** the coefficient of friction (µ) of the carriageway is determined, and the method is carried out only if the coefficient of friction is lower than a predefined threshold value.

5. Method according to one of the preceding claims, **characterized in that** a valve (13) of the brake system is actuated in order to limit the build-up of brake pressure at the wheel brake (11a-11d) of the test wheel or to completely prevent it.

6. Method according to one of the preceding claims, **characterized in that** the speed of the vehicle is monitored during a braking process and the build-up of brake pressure (p) at a wheel brake (11a-11d) is limited only if the speed is lower than a predefined speed threshold value.

7. Method according to one of the preceding claims, **characterized in that** the test wheel is a rear wheel (11c, 11d).

8. Method according to one of the preceding claims, **characterized in that** the rotational movement of the test wheel (12a-12d) is monitored, and the brake pressure (p) at all the wheels (12a-12d) is reduced if the wheel speed of the test wheel (12a-12d) is higher than a predefined threshold value.

9. Control unit having an algorithm (14) for carrying out a braking function by means of which a vehicle can be secured in the stationary state, **characterized in that** said control unit comprises means for carrying out a method according to one of the previously mentioned claims.

## Revendications

1. Procédé pour empêcher un véhicule à l'arrêt de rouler de manière accidentelle, dans lequel la pression de freinage (p) au niveau des freins de roues (11a-d) est automatiquement bloquée et maintenue afin d'empêcher le véhicule à l'arrêt de rouler de manière accidentelle, l'augmentation de la pression de freinage (p) pendant une opération de freinage au niveau du frein de roue (11a) d'une roue d'essai (12a) étant limitée de sorte qu'il existe au niveau de ce frein de roue (11a) une pression de freinage plus faible qu'au niveau des autres freins de roues (11b-11d),
**caractérisé en ce que** la pression de freinage réduite (p) au niveau du frein de roue (11a-11d) de la roue d'essai (12a-12d) est à nouveau diminuée encore avant l'arrêt du véhicule, afin de permettre un déplacement de la roue associée (12a-12d), au cas où le véhicule devait glisser.

2. Procédé selon la revendication 1, **caractérisé en ce que** l'augmentation de la pression de freinage (p) pendant une opération de freinage au niveau du frein de roue (11a) de la roue d'essai (12a) est totalement supprimée et le frein de roue (11a) est maintenu sans pression.

3. Procédé selon l'une quelconque des revendications précédentes, **caractérisé en ce que** la température ambiante (T) est contrôlée et le procédé n'est mis en oeuvre que si la température est inférieure à une valeur seuil prédéterminée.

4. Procédé selon l'une quelconque des revendications précédentes, **caractérisé en ce que** le coefficient de frottement (µ) de la chaussée est détecté et le procédé n'est mis en oeuvre que si le coefficient de frottement est inférieur à une valeur seuil prédéterminée.

5. Procédé selon l'une quelconque des revendications précédentes, **caractérisé en ce qu'**une soupape (13) de l'installation de freinage est commandée de manière à limiter ou à supprimer complètement l'augmentation de la pression de freinage au niveau du frein de roue (11a-11d) de la roue d'essai.

6. Procédé selon l'une quelconque des revendications précédentes, **caractérisé en ce que** la vitesse du véhicule est contrôlée pendant une opération de freinage, et l'augmentation de la pression de freinage (p) au niveau d'un frein de roue (11a-11d) n'est limitée que si la vitesse est inférieure à une valeur seuil de vitesse prédéterminée.

7. Procédé selon l'une quelconque des revendications précédentes, **caractérisé en ce que** la roue d'essai est une roue arrière (11c, 11d).

8. Procédé selon l'une quelconque des revendications précédentes, **caractérisé en ce que** le mouvement de rotation de la roue d'essai (12a-12d) est contrôlé et la pression de freinage (p) au niveau de toutes les roues (12a-12d) est diminuée si la vitesse de roue de la roue d'essai (12a-12d) est supérieure à une valeur seuil prédéterminée.

9. Appareil de commande comprenant un algorithme (14) pour mettre en oeuvre une fonction de freinage, au moyen de laquelle un véhicule peut être maintenu à l'arrêt, **caractérisé en ce qu'**il comprend des moyens pour mettre en oeuvre un procédé selon l'une quelconque des revendications précédentes.
